# DEMANDE DE BREVET EUROPEEN

(11) **EP 2 014 145 A1**
(43) Date de publication de la demande: **14.01.2009**
(21) Numéro de dépôt: 08104425.7
(22) Date de dépôt: 16.06.2008
(51) Int. Cl.: A01B 15/12

(54) **Machine agricole comportant un dispositif de liaison par bridage**

(30) Priorité: 18.06.2007 FR 0755810
(71) Demandeur: Kuhn-Huard S.A., 44142 Chateaubriant (FR)
(72) Inventeur: Herault, Vincent, 44470, Mauves sur Loire (FR); Cueille, Vincent, 44110, Erbray (FR)
(74) Mandataire: Andres, Jean-Claude

(57) **Abrégé**

La présente invention concerne un dispositif de liaison (1 ; 1A ; 1B) pour brider un équipement (4) sur un bâti (3) d'une machine agricole (2), ledit équipement (4) comportant une platine (13 ; 13A ; 13B) venant en regard dudit bâti (3).

Ledit dispositif de liaison est remarquable en ce que ledit dispositif de liaison (1 ; 1A ; 1B) comporte une pièce de liaison supérieure (14 ; 14A) et une pièce de liaison inférieure (15 ; 15A) reliées par l'intermédiaire d'un moyen de fixation (16 ; 16A), chaque pièce de liaison (14, 15 ; 14A, 15A) comporte une face inclinée (17 ; 17A) destinée à être en contact avec ladite platine (13 ; 13A ; 13B) et une face opposée (20 ; 20A) destinée à être en contact avec le bâti (3).

La présente invention concerne également une machine agricole (2) comportant un dispositif de liaison selon l'invention.

## Description

La présente invention se rapporte au domaine technique général du machinisme agricole. Elle concerne plus particulièrement un dispositif de liaison pour brider un équipement sur le bâti d'une machine agricole, ledit équipement comportant une platine venant en regard du bâti.

D'une manière générale, le bâti d'une machine agricole est pourvu d'équipements permettant à la machine de travailler. Ces équipements sont soit soudés ou soit boulonnés sur le bâti via une platine. Il est usuel pour un assemblage par boulons que le bâti comporte des perçages. Ces perçages donnent la position de l'équipement sur le bâti. L'équipement est maintenu par serrage du boulon.

Un tel assemblage par boulonnage est connu et est décrit dans le document FR 2 678 471. La charrue connue comporte un bâti. Le bâti est relié à un tracteur par l'intermédiaire d'un équipement. Cet équipement est boulonné sur le bâti via une platine. Ces boulons traversent la platine et le bâti, ils s'étendent sensiblement horizontalement dans la position de travail. Le bâti est ainsi pourvu de perçages destinés à recevoir un boulon respectif. Le positionnement en hauteur et dans le sens longitudinal de l'équipement sur le bâti est donné par la position des perçages. L'équipement est immobilisé sur le bâti par le serrage des boulons.

Lors du travail, les corps de labour de la charrue travaillent la terre et le bâti portant les corps de labour doit supporter des efforts importants qui s'opposent à la direction d'avance. En conséquence des importants efforts au niveau des corps de labour, les perçages ménagés dans le bâti sont déformés par matage. Par conséquent, le positionnement initial de l'équipement sur le bâti n'est donc plus assuré et le jeu des boulons dans les perçages ne peut être compensé que par serrage. La profondeur de travail comme la largeur de travail des corps de labour évoluent donc au cours du travail. On sait également que la résistance du bâti est réduite par la présence de perçages et que ces perçages peuvent constituer des amorces de rupture.

La présente invention a pour but de remédier aux différents inconvénients précités et notamment de proposer un dispositif de liaison permettant un bridage efficace et durable dans le temps. Le dispositif de liaison devra assurer le maintien de la position déterminée de l'équipement sur le bâti tout en permettant un réglage continu de la position longitudinale de l'équipement sur le bâti.

A cet effet, une importante caractéristique de l'invention consiste en ce que ledit dispositif de liaison comporte une pièce de liaison supérieure et une pièce de liaison inférieure reliées par l'intermédiaire d'un moyen de fixation, chaque pièce de liaison comporte une face inclinée destinée à être en contact avec ladite platine et une face opposée destinée à être en contact avec le bâti. L'utilisation d'une pièce de liaison supérieure et d'une pièce de liaison inférieure permet un bridage de l'équipement sur le bâti par le serrage du moyen de fixation. Ce dispositif de liaison n'implique pas de perçages dans le bâti. La résistance du bâti n'est donc pas réduite et le risque de rupture est diminué. Le moyen de fixation permet avantageusement de compenser un jeu dans le dispositif de liaison sans détériorer le positionnement initial de l'équipement sur le bâti. Un tel bridage est donc optimal et durable dans le temps. Il permet aussi un réglage de la position de l'équipement le long du bâti. Lors du serrage du moyen de fixation, la face inclinée des pièces de liaison entraîne un blocage latéral et vertical de l'équipement sur le bâti.

Avec un tel dispositif de liaison, on peut monter différents équipements sur un même bâti. Un atout supplémentaire réside dans le caractère interchangeable de la solution. Ainsi un bâti ou un équipement peut facilement et rapidement être échangé. Un autre avantage du dispositif de liaison de l'invention est que la fabrication et le pré-montage du bâti et/ou des équipements sont réalisés de manière totalement indépendante.

D'autres caractéristiques et avantages de l'invention ressortiront des revendications et de la description ci-après de plusieurs exemples de réalisation non limitatifs de l'invention avec référence aux dessins annexés dans lesquels :
- la **figure 1** représente une vue générale d'un dispositif de liaison selon l'invention,
- la **figure 2** représente un premier exemple de réalisation d'un dispositif de liaison selon l'invention,
- la **figure 3** représente une vue en coupe du dispositif de liaison de l'invention de la figure 2,
- la **figure 4** représente un deuxième exemple de réalisation d'un dispositif de liaison selon l'invention,
- la **figure 5** représente une vue en coupe du dispositif de liaison de l'invention de la figure 4,
- la **figure 6** représente un troisième exemple de réalisation d'un dispositif de liaison selon l'invention,
- la **figure 7** représente une vue en coupe du dispositif de liaison de l'invention de la figure 6.

Les figures représentent un dispositif de liaison (1) pour une machine agricole (2). Le dispositif de liaison (1) selon l'invention permet de brider un équipement (4) sur le bâti (3) d'une machine agricole (2). Le terme « équipement » est à prendre au sens large. Ainsi, par ce terme, on entend tout équipement qui peut être monté sur un bâti pour assurer une fonction spécifique. Par exemple, un équipement pour maintenir le bâti à une certaine hauteur par rapport au sol, un équipement permettant de travailler la terre, un équipement permettant de relier le bâti à un tracteur ...

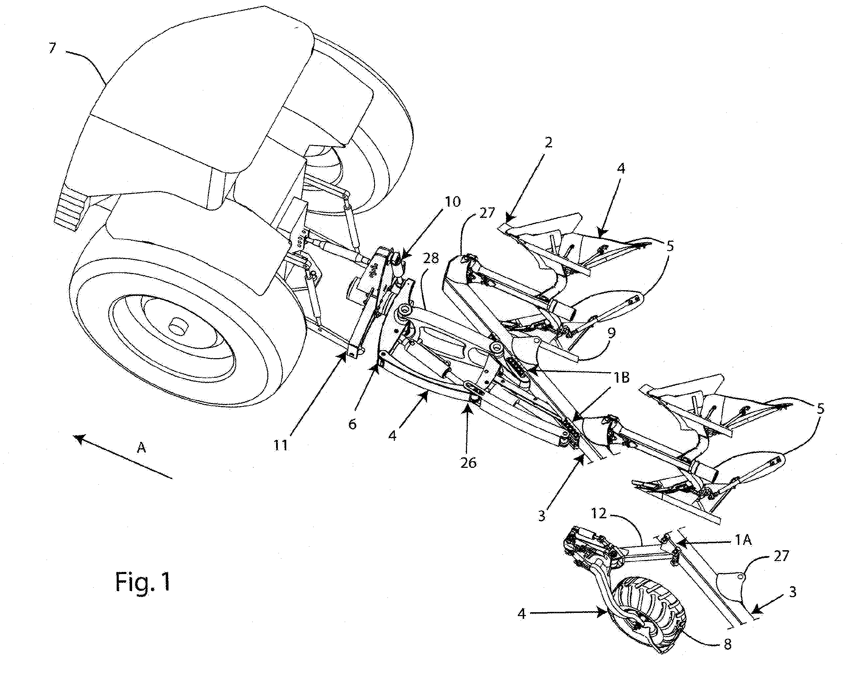

La machine agricole (2) représentée sur la figure 1 est une charrue. Cette charrue comporte, d'une manière connue, notamment un bâti (3) avec des corps de labour (5), une partie avant (6) reliée à un tracteur (7) et une roue d'appui (8). La partie avant (6) ainsi que la roue d'appui (8) sont avantageusement reliées au bâti (3) via un dispositif de liaison (1) selon l'invention. Dans le cas spécifique de la charrue, la direction d'avance (A) est donnée par la direction du contresep (9) du corps de labour (5). Globalement le bâti (3) est incliné par rapport à la direction d'avance (A). Les efforts au niveau du bâti (3) se décomposent donc selon deux composantes, une composante dans la direction d'avance (A) et une composante perpendiculaire à la direction d'avance (A). Il est aussi courant que le bâti (3) d'une charrue soit réalisé par une poutre longitudinale creuse. La section de cette poutre est telle qu'elle soit résistante à la torsion ainsi qu'à la flexion.

Par ailleurs, la charrue de la figure 1 est une charrue réversible. Le bâti (3) porte donc deux groupes de corps de labour (5). Chaque groupe travaille alternativement la terre grâce à une rotation de 180° du bâti (3). Le passage d'une position de travail à une autre est effectué par l'intermédiaire d'un dispositif de retournement (10). Ainsi les corps de labour (5) sont disposés soit à gauche soit à droite du bâti (3). Sur la figure 1, la charrue est représentée dans une position de travail où les corps de labour (5) sont à droite du bâti (3) par rapport à la direction d'avance (A). Seuls deux groupes de corps de labour (5) sont représentés. Pour le transport, le bâti (3) pivote de 90° seulement par rapport à une des positions de travail. Dans cette position (non représentée), tous les corps de labour (5) sont disposés sensiblement au-dessus du bâti (3). Les éléments spécifiques d'une charrue réversible sont connus de l'homme de l'art, ils ne seront donc pas décrits plus en détails.

La partie avant (6) ainsi que la roue d'appui (8) constituent des équipements (4) qui peuvent être montés sur le bâti (3) de la charrue. Ces équipements (4) sont bridés sur le bâti (3) via le dispositif de liaison (1) de l'invention.

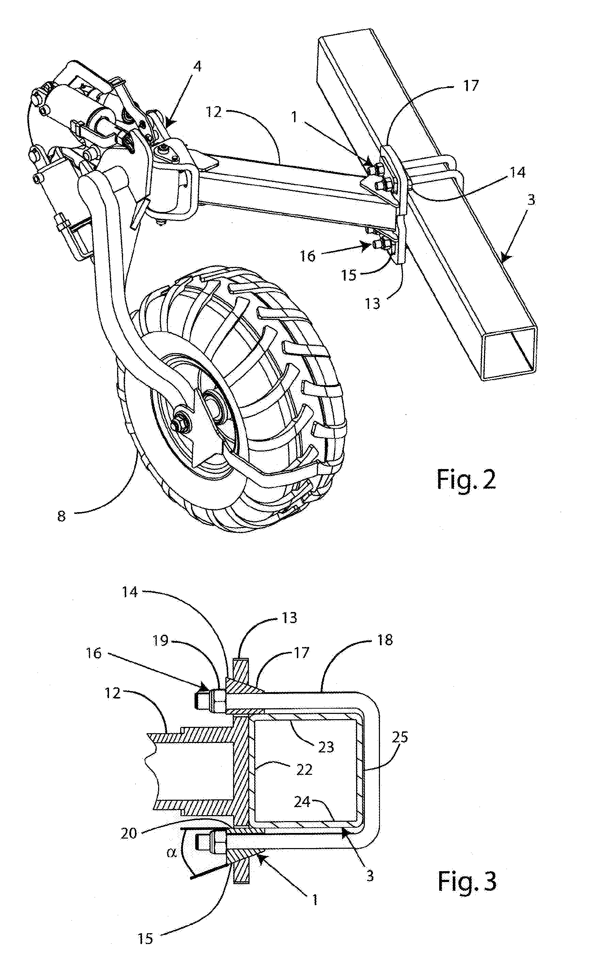

La figure 2 représente un dispositif de liaison (1) selon un premier exemple de réalisation. Ce dispositif de liaison (1) permet de brider une roue d'appui (8) sur le bâti (3) d'une charrue. La roue d'appui (8) a pour fonction d'assurer que le bâti (3) reste à une hauteur constante par rapport au sol. Dans le cas spécifique de la charrue, la roue d'appui (8) est aussi appelée roue de régulation, elle permet de régler la profondeur de travail des corps de labour (5) en combinaison avec le système d'attelage (11) du tracteur (7). Pour assurer une telle fonction, il est primordial que la roue d'appui (8) soit bridée sur le bâti (3) dans une position fixe. Avec ce dispositif de liaison (1), la roue d'appui (8) est bloquée sur le bâti (3) dans les trois dimensions. On verra plus loin comment est réalisé le blocage vertical, le blocage latéral et le blocage longitudinal de l'équipement (4) sur le bâti (3).

La roue d'appui (8) est liée au bâti (3) par l'intermédiaire d'un bras de roue (12) et d'une platine (13). La platine (13) est une plaque d'assemblage disposée à l'extrémité du bras de roue (12), fixée par soudage dans un plan perpendiculaire à l'axe longitudinal du bras de roue (12). La platine (13) vient en regard du bâti (3) pour le bridage de la roue d'appui (8) par le dispositif de liaison (1).

Selon une caractéristique importante de l'invention, le dispositif de liaison (1) comporte une pièce de liaison supérieure (14) et une pièce de liaison inférieure (15) reliées par l'intermédiaire d'un moyen de fixation (16), chaque pièce de liaison (14, 15) comporte une face inclinée (17). La face inclinée (17) est destinée à être en contact avec la platine (13). Grâce à la face inclinée (17) des pièces de liaison (14, 15), on obtient lors du serrage du moyen de fixation (16) un effort de serrage combiné qui se décompose en un effort horizontal et en un effort vertical. L'effort horizontal engendre le blocage latéral de l'équipement (4) sur le bâti (3) et l'effort vertical engendre le blocage vertical de l'équipement (4) sur le bâti (3). C'est grâce au couple de serrage du moyen de fixation (16), que l'équipement (4) est bridé dans une position fixe le long du bâti (3). Avec un tel dispositif de liaison (1), l'équipement (4) est bridé sur le bâti (3) de manière efficace et garantie dans le temps. D'autre part, la position de l'équipement (4) le long du bâti (3) peut être modifiée aisément en donnant du jeu au dispositif de liaison par desserrage du moyen de fixation (16).

Le dispositif de liaison (1), selon le premier exemple de réalisation, comporte avantageusement une cale de liaison supérieure (14) et une cale de liaison inférieure (15). Ces deux cales (14, 15), disposées respectivement au-dessus et en dessous du bâti (3), sont reliées par un moyen de fixation (16). Ce moyen de fixation est composé d'un étrier (18) et de deux écrous (19). L'étrier (18) présente une forme en U dont les extrémités sont fixées par des écrous (19). Chaque étrier (18) est apte à chevaucher la poutre du bâti (3). La platine (13) s'étend sensiblement verticalement alors que l'extrémité des étriers (18) s'étend sensiblement horizontalement. La figure 2 représente la partie arrière d'une charrue dans une position de travail. Les orientations verticales ou horizontales sont données par rapport à la position de travail de la charrue. Pour un maintien optimal et équilibré du bras de roue (12) sur le bâti (3), on disposera un étrier (18) de part et d'autre du bras de roue (12). Ces deux étriers (18) seront fermés par une même cale supérieure (14) et une même cale inférieure (15).

Selon un exemple non représenté, l'utilisation de demi-étrier est également envisageable.

D'après la figure 3, on remarque que la poutre du bâti (3) présente une section carrée. La poutre présente une face principale (22), deux faces secondaires (23, 24) et une quatrième face (25). Avec une telle section, le bâti (3) peut supporter les corps de labour (5). La platine (13) présente des ouvertures destinées à recevoir les cales de liaison (14, 15). La forme de l'ouverture est complémentaire à la forme de la cale de liaison (14, 15) correspondante. Chaque cale de liaison (14, 15) présente une forme globale biaisée avec une face inclinée (17) et une face opposée (20). La face opposée (20) est située en vis-à-vis de la face inclinée (17). La face opposée (20) de chaque cale (14, 15) est destinée à venir s'appuyer sur la poutre du bâti (3). La platine (13) avec les cales (14, 15) ferme les étriers (18) à l'état positionné sur le bâti (3). Le serrage des écrous (19) fait avancer les cales (14, 15) à travers les ouvertures complémentaires de la platine (13) suivant la direction des extrémités des étriers (18).

La face inclinée (17) présente un angle aigu (α) par rapport à la face opposée (20). Dans le premier exemple de réalisation, la face opposée (20) est sensiblement horizontale. Cet angle aigu (α) est avantageusement compris entre 10° et 60°. Lors du montage et lors du serrage des étriers (18) par les écrous (19), chaque face inclinée (17) permet un guidage des cales (14, 15) dans la platine (13). Grâce aux faces inclinées (17) des cales (14, 15), on obtient un effort de serrage combiné. Cet effort de serrage combiné plaque d'une part la platine (13) du bras de roue (12) contre la face principale (22) du bâti (3) et d'autre part assure le contact des faces opposées (20) de chaque cale (14, 15) sur les faces secondaires (23, 24) du bâti (3). On remarque, à la lumière de la figure 3, que la longueur de la face opposée (20) est inférieure à la longueur des faces secondaires (23, 24). Selon la longueur des faces opposées (20), la surface de contact entre les faces secondaires (23, 24) du bâti (3) et les faces opposées (20) est plus ou moins importante. Ainsi, la roue d'appui (8) via son bras de roue (12) est maintenue d'une manière sûre sur le bâti (3). La face opposée (20) est, d'une manière alternative, inclinée par rapport à l'horizontale.

D'après la figure 2, on constate qu'un équipement (4) bridé sur le bâti (3) via un dispositif de liaison (1) selon le premier exemple de réalisation peut être déplacé le long du bâti (3). Ce déplacement ou réglage longitudinal est limité par la présence d'éventuels autres équipements équipant le bâti (3). Le déplacement longitudinal est notamment limité par l'utilisation des étriers (18) qui entourent la poutre du bâti (3).

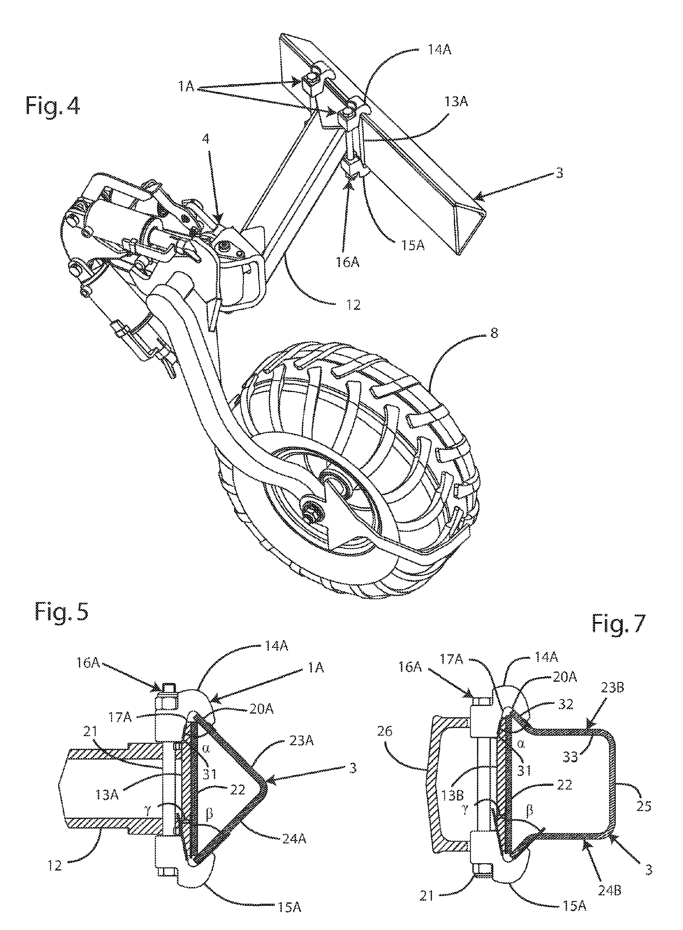

La figure 4 représente une deuxième forme de réalisation d'un dispositif de liaison (1A) selon la présente invention. Ce dispositif de liaison (1A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif de liaison (1) décrit précédemment. Ces éléments seront affectés du même numéro de repère que ces éléments comparables du dispositif de liaison (1) suivi de la lettre A. Ils ne seront décrits que si cela s'avère nécessaire.

Le dispositif de liaison (1A) selon le deuxième exemple de réalisation permet également de fixer une roue d'appui (8) via son bras de roue (12) sur le bâti (3). Le dispositif de liaison (1A) comporte avantageusement un crochet de liaison supérieur (14A) et un crochet de liaison inférieur (15A). Ces crochets de liaison (14A, 15A) sont disposés respectivement au-dessus et en dessous du bâti (3) et sont reliés par un moyen de fixation (16A). Le moyen de fixation (16A) utilisé est un boulon (21) composé d'une vis et d'un écrou. Pour un montage équilibré, une paire de crochets (14A, 15A) est prévue de part et d'autre du bras de roue (12), c'est-à-dire respectivement à l'avant et à l'arrière du bras de roue (12) compte tenu de la direction d'avance (A). Une paire de crochets est composée par un crochet de liaison supérieur (14A) et un crochet de liaison inférieur (15A).

A la lumière de la figure 5, chaque crochet (14A, 15A) comporte une face inclinée (17A) et une face opposée (20A).). La face opposée (20A) est située en vis-à-vis de la face inclinée (17A). La face opposée (20A) est destinée à venir en contact avec le bâti (3), elle présente un angle aigu (α) par rapport à la face opposée (20). L'angle aigu (α) est également compris entre 10° et 60°. Cet angle aigu (α) correspond à l'angle d'ouverture du crochet. La face opposée (20A) est avantageusement inclinée d'un premier angle (β) par rapport à la verticale. Ce premier angle (β) est compris entre 30° et 60°. La face inclinée (17A) est destinée à venir en contact avec la platine (13), elle est avantageusement inclinée d'un deuxième angle (γ) par rapport à la verticale. Ce deuxième angle (γ) est compris entre 5° et 20°. Dans ce deuxième exemple de réalisation, la poutre du bâti (3) présente une section en triangle. La poutre comporte une face principale (22) et deux faces secondaires (23A, 24A). La face principale (22) est droite, elle s'étend sensiblement verticalement. Les deux faces secondaires (23A, 24A) sont inclinées par rapport à la face principale (22), elles se rejoignent en s'éloignant de la face principale (22). D'une manière avantageuse, le profil de la poutre est un triangle isocèle, ainsi les faces secondaires (23A, 24A) présentent une même longueur.

Pour l'assemblage, la platine (13A) vient en regard de la face principale (22) du bâti (3) et les crochets (14A, 15A) sont montés respectivement au-delà et en deçà de ladite face principale (22). La face inclinée (17A) du crochet (14A, 15A) s'appui contre la platine (13A) et la face opposée (20A) est destinée à s'appuyer contre l'une des faces secondaires (23, 24) de la poutre. On remarque que la longueur de la face opposée (20A) est inférieure à la longueur desdites faces secondaires (23A, 24A). Pour cela, chacune des faces secondaires (23, 24) est orientée du premier angle (β) par rapport à la face principale (22) et la face extérieure (31) de la platine (13A) est orientée du deuxième angle (γ) par rapport à la face de la platine (13A) destinée à venir en regard du bâti (3). Ainsi le crochet supérieur (14A) et le crochet inférieur (15A) viennent littéralement pincer la poutre au niveau des faces secondaires (23A, 24A) grâce au boulon (21) qui s'étend verticalement. La roue d'appui (8) est alors bloquée verticalement et latéralement sur le bâti (3) grâce à la face opposée (20A). Un tel bridage est donc efficace. En desserrant quelque peu le boulon (21), on peut régler la position longitudinale de la roue d'appui (8) sur le bâti (3).

On remarque, à la lumière des figures 4 et 5, que le boulon (21) ne traverse pas la poutre du bâti (3). La vis et l'écrou constituant le boulon (21) s'étendent à gauche de la poutre au voisinage de la face principale (22). Le boulon (21) est bien accessible pour le serrage des crochets (14A, 15A). Grâce à l'inclinaison de la face (17A) selon le deuxième angle (γ), on obtient un centrage automatique de la position en hauteur de l'équipement (4) sur la poutre du bâti (3).

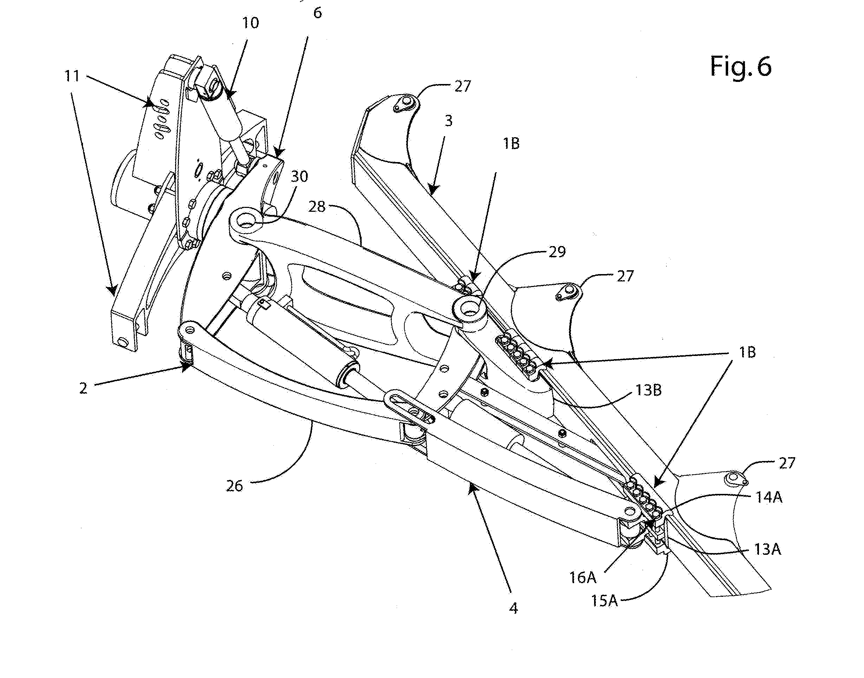

La figure 6 représente une troisième forme de réalisation d'un dispositif de liaison (1B) selon la présente invention. Ce dispositif de liaison (1B) comporte un certain nombre d'éléments qui ont déjà été décrits précédemment. Ces éléments garderont par conséquent le même numéro de repère et ne seront pas redécrits. Il comporte également un certain nombre d'éléments qui sont comparables à des éléments du dispositif de liaison (1, 1A) décrit précédemment. Ces éléments seront affectés du même numéro de repère que ces éléments comparables du dispositif de liaison (1, 1A) suivi de la lettre B. Ils ne seront décrits que si cela s'avère nécessaire.

Le dispositif de liaison (1B) permet de brider la partie avant (6) d'une charrue sur le bâti (3) dans une position longitudinale bien déterminée. Sur cette figure, la partie avant (6) de la charrue est dans une position de travail. Seuls les porte-ages (27), destinés à porter un corps de labour (5) respectif, ont été représentés. On remarque que le dispositif de bridage (1B) est disposé d'un côté du bâti (3) et que les porte-ages (27) sont disposés de l'autre côté. Le dispositif de liaison (1B) est réalisé de manière à ne pas créer d'interférence avec les porte-ages (27). La position longitudinale du dispositif de bridage (1B) sur le bâti (3) n'est donc pas limitée par les porte-ages (27). Ainsi le positionnement de la partie médiane (26) sur le bâti (3) est possible quelle que soit la position des porte-ages (27) avec leurs corps de labour (5).

La partie avant (6) est liée audit bâti (3) par l'intermédiaire d'une partie médiane (26). Cette partie médiane (26) comporte une platine ou une interface (13B) qui est placée en regard du bâti (3). La partie médiane (26) comporte notamment une bielle principale (28) liée d'une part à l'interface (13B) au moyen d'une première articulation (29) d'axe géométrique au moins sensiblement vertical et d'autre part à la partie avant (6) au moyen d'une deuxième articulation (30) d'axe géométrique au moins sensiblement vertical. C'est la partie avant (6) qui supporte la charge du bâti (3) équipé des corps de labour (5) et des équipements (4) par l'intermédiaire de la bielle principale (28). C'est la première articulation (29) qui a pour rôle de reprendre les efforts mécaniques et notamment de soulever le bâti (3) lors des manoeuvres. Le dispositif de bridage (1B) est prévu dans le voisinage de la première articulation (29) de la bielle principale (28).

A la lumière de la figure 6, un dispositif de bridage (1B) est disposé de part et d'autre de la première articulation (29). Les dispositifs de bridage (1B) transmettent l'intégralité des sollicitations mécaniques issues de la charrue : poids du bâti (3), efforts dus au travail des corps de labour (5) à la partie avant (6) via la partie médiane (26). Avec un dispositif de bridage (1B) de chaque côté de la première articulation (29), les sollicitations sont mieux réparties et équilibrées.

Dans l'exemple de réalisation représenté sur la figure 6, la partie médiane (26) est liée avantageusement au bâti (3) au moyen de trois dispositifs de bridage (1B). Les deux premiers sont adjacents à la première articulation (29) comme décrits précédemment. Le troisième est disposé plus en arrière de la partie médiane (26). Ce troisième dispositif de bridage permet de modifier l'angle du bâti (3) par rapport à la bielle principale (28), par pivotement autour de la première articulation (29). Ce mouvement est utile pour faire varier la largeur de coupe des corps de labour (5) et pour réduire l'angle du bâti (3) avec la direction d'avance (A) lors des retournements.

Le dispositif de liaison (1B), selon le troisième exemple de réalisation, comporte avantageusement au moins un crochet de liaison supérieur (14A) et au moins un crochet de liaison inférieur (15A). Ces crochets sont similaires à ceux du deuxième exemple de réalisation. Ces deux crochets (14A, 15A), disposés respectivement au-dessus et en dessous du bâti (3), sont reliés par un moyen de fixation (16A) respectif du type boulon (21). Le boulon (21) s'étend sensiblement verticalement dans la position de travail représentée sur la figure 6. La face inclinée (17A) est aussi orientée d'un deuxième angle (γ) par rapport à la face de l'interface (13B) destinée à venir en regard du bâti (3). Lors du montage du dispositif de liaison (1B), la face opposée (20A) de chaque crochet (14A, 15A) vient s'appuyer contre la face extérieure (31) de l'interface (13B). La face extérieure (31) de l'interface (13B) est orientée du deuxième angle (γ) par rapport à la face destinée à venir en regard du bâti (3). On remarque que la face opposée (20A) de chaque crochet (14A, 15A) vient en regard d'une des faces secondaires (23B, 24B) et que la longueur de cette face opposée (20A) est inférieure à la longueur desdites faces secondaires (23B, 24B). De préférence, la longueur de la face opposée (20A) est sensiblement inférieure à la longueur de la portion inclinée (32).

D'une manière générale, la largeur de chaque crochet (14A, 15A) ainsi que le diamètre des boulons (21) sont des paramètres qui peuvent évoluer en fonction du nombre de paires de crochets utilisé. La largeur d'un crochet est telle que le boulon (21) puisse être facilement monté. La largeur du crochet est donc telle que le crochet dépasse de part et d'autre de la tête du boulon (21). La platine (13A) du deuxième exemple de réalisation comme l'interface (13B) décrit dans le troisième exemple de réalisation évolueront en conséquence.

On remarque également sur la figure 6 que la largeur des crochets (14A, 15A) est variable. Le dispositif de bridage (1B) à l'avant de la première articulation (29) est composé de deux paires de crochets (14A, 15A) disposées côte à côte. Le dispositif de bridage (1B) à l'arrière de la première articulation (29) est composé de cinq paires de crochets (14A, 15A) disposées côte à côte. Chacune des paires étant maintenue par un boulon (21) respectif. Le dispositif de bridage (1B) disposé à l'arrière de la partie médiane (26) est composé d'une seule paire de crochets (14A, 15A), les crochets (14A, 15A) présentent une grande largeur. Le crochet supérieur (14A) est relié avec le crochet inférieur (15A) au moyen de plusieurs boulons (21).

La figure 7 représente une vue en coupe, passant par un dispositif de bridage (1B), lorsque la machine agricole (2) est au travail, c'est-à-dire qu'une partie des corps de labour (5) est en terre. Dans ce troisième exemple de réalisation, l'interface (13B) vient s'appuyer contre le bâti (3). L'interface (13B) comporte une ouverture supérieure et inférieure destinées à recevoir les crochets (14A, 15A) qui sont reliés par le boulon (21) respectif. La poutre du bâti (3) présente quatre faces (22, 23, 24, 25) formant ensemble un profil sensiblement en trapèze. La face principale (22) s'étend sensiblement verticalement lors du travail. Les faces secondaires (23B, 24B) s'étendent sensiblement transversalement par rapport à la face principale (22). La quatrième face (25) ferme le profil en trapèze. Les deux faces (22, 25) ne sont pas consécutives, elles sont sensiblement parallèles. Les deux faces secondaires (23B, 24B) présentent une forme particulière avec une portion inclinée (32) du premier angle (β) du côté de la face principale (22) et une portion sensiblement droite (33) du côté de la quatrième face (25). Les deux faces (22, 25) ne présentent donc pas la même longueur, la quatrième face (25) est plus courte. Avec un tel profil en trapèze, le bâti (3) peut aussi supporter les corps de labour (5).

Par le serrage du boulon (21) dans une direction verticale, le crochet supérieur (14A) et le crochet inférieur (15A) exercent une pression au niveau de la portion inclinée (32) du bâti (3) et au niveau des faces extérieures (31) de l'interface (13B). Grâce à l'inclinaison de la face inclinée (17A) selon le deuxième angle (γ), on obtient un centrage automatique de la position en hauteur de l'équipement (4) sur la poutre du bâti (3). Un tel assemblage permet un réglage continu et sûr dans le temps de la position de la partie médiane (26) sur le bâti (3). Cette position peut être adaptée en continu, il n'y a pas de paliers prédéfinis.

Pour un travail optimal de la charrue, la partie médiane (26) est placée à une certaine distance de l'extrémité avant du bâti (3) en fonction de la largeur de travail souhaitée. Ce mode d'assemblage par bridage permet d'adapter facilement sur un même bâti (3) des parties médianes (26) différentes. Inversement une même partie médiane (26) peut être assemblée avec des bâtis (3) ayant un nombre ou un type de corps de labour (5) différents, avec une distance différente entre lesdits corps de labour (5). Par ailleurs, ce type d'assemblage permet aussi de préassembler le bâti (3) et la partie médiane (26) de manière indépendante.

Il est aussi envisageable de monter les porte-ages (27) sur le bâti via l'un des dispositifs de liaison (1, 1A, 1B) décrit précédemment. Pour cela, les deux faces secondaires (23B, 24B) présentent chacune deux portions inclinées (32). Une portion inclinée (32) s'étend au voisinage de la face principale (22) et l'autre s'étend au voisinage de la quatrième face (25). Une portion droite et horizontale (33) s'étendant entre les deux portions inclinées (32). La distance entre les deux corps de labour (5) pourra alors aussi être réglée en les déplaçant le long du bâti (3).

Selon un exemple de réalisation non représenté, la face principale (22) n'est pas droite, sa surface est quelconque. La face de la platine (13) qui vient en regard de la face principale (22) aura une surface correspondante. Selon un autre exemple de réalisation non représenté, le profil de la poutre est un losange.

D'une manière alternative, chaque crochet (14A, 15A) pourra être maintenu sur la platine (13A) ou l'interface (13B) par un moyen de fixation respectif. La platine (13A) et l'interface (13B) sont alors équipées d'une plaque de fixation disposée sensiblement dans un plan horizontal médian.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Dispositif de liaison (1 ; 1A ; 1B) pour brider un équipement (4) sur un bâti (3) d'une machine agricole (2), ledit équipement (4) comportant une platine (13 ; 13A ; 13B) venant en regard dudit bâti (3), ***caractérisé en ce* que** ledit dispositif de liaison (1 ; 1A ; 1B) comporte une pièce de liaison supérieure (14 ; 14A) et une pièce de liaison inférieure (15 ; 15A) reliées par l'intermédiaire d'un moyen de fixation (16 ; 16A), chaque pièce de liaison (14, 15 ; 14A, 15A) comporte une face inclinée (17 ; 17A) destinée à être en contact avec ladite platine (13 ; 13A ; 13B) et une face opposée (20 ; 20A) destinée à être en contact avec le bâti (3).

2. Dispositif de bridage selon la revendication 1, ***caractérisé en ce* que** ladite face inclinée (17; 17A) présente un angle aigu (α) avec ladite face opposée (20; 20A).

3. Dispositif de liaison selon la revendication 1 ou 2, ***caractérisé en ce* que** ledit bâti (3) est une poutre présentant une face principale (22) et deux faces secondaires (23, 24; 23A, 24A ; 23B, 24B).

4. Dispositif de bridage selon l'une quelconque des revendications 1 à 3, ***caractérisé en ce* que** lesdites pièces de liaison (14, 15) sont montées dans des ouvertures respective de ladite platine (13) et sont reliées par ledit moyen de fixation (16) constitué d'un étrier (18) et de deux écrous (19).

5. Dispositif de bridage selon la revendication 3, ***caractérisé en ce* que** chaque face opposée (20) présente une longueur sensiblement inférieure à la longueur des faces secondaires (23, 24).

6. Dispositif de bridage selon l'une quelconque des revendications 1 à 5, ***caractérisé en ce* que** ladite face opposée (20A) vient en regard d'une des faces secondaires (23A, 24A ; 23B, 24B) et que la longueur de ladite face opposée (20A) est inférieure à la longueur des faces secondaires (23A, 24A; 23B, 24B).

7. Dispositif de liaison selon la revendication 3 ou 6, ***caractérisé en ce* que** chaque face secondaire (23B, 24B) comporte une portion inclinée (32) et une portion droite (33), la longueur de ladite face opposée (20A) est inférieure à la longueur de ladite portion inclinée (32).

8. Dispositif de liaison selon la revendication 1, ***caractérisé en ce* que** chaque face inclinée (17A) présente un angle (γ) compris entre 5° et 20° par rapport à la verticale.

9. Dispositif de bridage selon l'une quelconque des revendications 1 à 8, ***caractérisé en ce* que** ledit équipement (4) est constitué d'une partie médiane (26) permettant de lier une partie avant (6) audit bâti (3), ladite partie médiane (26) comporte une bielle principale (28) et une interface (13B), ladite bielle principale (28) est reliée à l'interface (13B) au moyen d'une première articulation (29).

10. Dispositif de bridage selon la revendication 9, ***caractérisé en ce* qu'**au moins un dispositif de bridage (1; 1A; 1B) est disposé au voisinage de ladite première articulation (29).

11. Machine agricole (2), ***caractérisée en ce* qu'**elle comporte au moins un dispositif de bridage selon l'une quelconque des revendications 1 à 10.
